# EUROPEAN PATENT APPLICATION

(11) **EP 2 386 837 A1**
(43) Date of publication of application: **16.11.2011**
(21) Application number: 10160369.4
(22) Date of filing: 19.04.2010
(51) Int. Cl.: G01F 23/18

(54) **Fluid level indicator strip.**

(71) Applicant: Stephens, Colin, Abbotsford (CA)
(72) Inventor: Stephens, Colin, Abbotsford (CA)
(74) Representative: Bartle, Robin Jonathan

(57) **Abstract**

A fluid level indicator strip measures the level of water in a closed receptacle containing a volume of fluid within an impermeable liner. The strip is a flexible, thin and impermeable elongate strip having a first pressure sensing part disposed vertically within the receptacle on the surface of an inside wall and a second visual display part disposed on the same wall outside surface. The first and second parts are connected by a third horizontal part. Each pressure sensor is electrically connected to a direct opposite and corresponding visual display. In one embodiment the pressure sensors are piezoresistive. In another embodiment the visual displays are LEDs.

## Description

### BACKGROUND OF THE INVENTION

Field of the Invention

This invention relates to apparatus for measuring the level of a fluid in a container and more particularly to a fluid level indicator strip.

Background Discussion

In food transportation applications it is important to maintain the integrity of the shipping receptacle to prevent contaminants from entering it. It is also important when shipping fluids in bulk that the level of fluid in the receptacle can be monitored. Known level indicators such as sight glasses are bulky, fragile and require holes drilled into the walls of the receptacle. This will compromise the seal of the receptacle. Other level indicators such as float-type fluid level indicators are mechanical and prone to breakdown. Furthermore, if the fluids are carried within a bladder or impermeable liner within the container, the ability to measure fluid levels in the receptacle becomes problematic.

Therefore there is a requirement to provide a fluid level indicator that can be used to indicate fluid levels within a sealed receptacle without the use of sight glasses and mechanical means.

### SUMMARY OF THE INVENTION

To overcome deficiencies noted above the invention provided is a fluid level indicator strip for a receptacle containing a volume of fluid within an impermeable liner.

The strip is flexible, thin, impermeable and elongate. The strip is a single piece but can be described as having three parts that are contiguous. A first part of the strip houses a fluid level sensing means for disposition within the receptacle between the inside wall surface and the impermeable liner. A second part of the strip houses a fluid level display means for disposition outside of the receptacle. A third part of the strip connects the first inside part and the second part. The fluid level indicator strip is powered by power means such as a battery that electrically connects the fluid level sensing means to the fluid level display means.

The first part is disposed vertically on the inside surface of the receptacle. The second part is disposed vertically on the outside surface of the receptacle directly opposite the first part. The third part is disposed horizontally on the top surface of the wall and does not interfere with sealing of the receptacle.

In one embodiment of the invention the fluid level sensing means are pressure sensors.

In one embodiment of the invention the pressure sensors are piezoresistive and the visual displays may be light emitting diodes (LEDs). The visual displays can also be liquid crystal displays (LCDs).

In another embodiment of the invention the pressure sensors are electro-mechanical pressure sensors.

In one embodiment of the invention the strip comprises two layers of impermeable material fixed in a sandwiched fashion so that the level sensors and visual displays are inside of the strip. One side of the strip is adhesive so that it can be removeably attached to the inside and outside walls of a receptacle.

In another embodiment of the invention for each pressure sensor there is a corresponding and opposite visual display electrically connected to it. As the water level actuates a pressure switch the corresponding opposite visual display is activated. For example, the corresponding LED is illuminated to display the fluid level within the receptacle outside the receptacle.

BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

Figure 1 is a partial diagram of the inside of a receptacle showing pressure sensing means of one embodiment of the invention.

Figure 2 is a partial diagram of the outside of a receptacle showing visual display means of one embodiment of the invention.

Figure 3 is a cross-sectional diagram of a wall of a receptacle showing one embodiment of the invention.

Figure 4 is a partial circuit diagram of one embodiment of the invention showing pressure switches.

Figure 5 is a partial circuit diagram of one embodiment of the invention showing visual displays.

Figure 6 is a partial circuit diagram of one embodiment of the invention showing the third part and the connection between the first and second parts of the invention.

Figure 7 is a schematic diagram of the circuit of one embodiment of the invention.

It will be appreciated that for simplicity and clarity of illustration, elements shown in the figures have not necessarily been drawn to scale. For example, the dimensions of some of the elements may be exaggerated relative to other elements for clarity.

### DETAILED DESCRIPTION OF EMBODIMENTS OF THE INVENTION

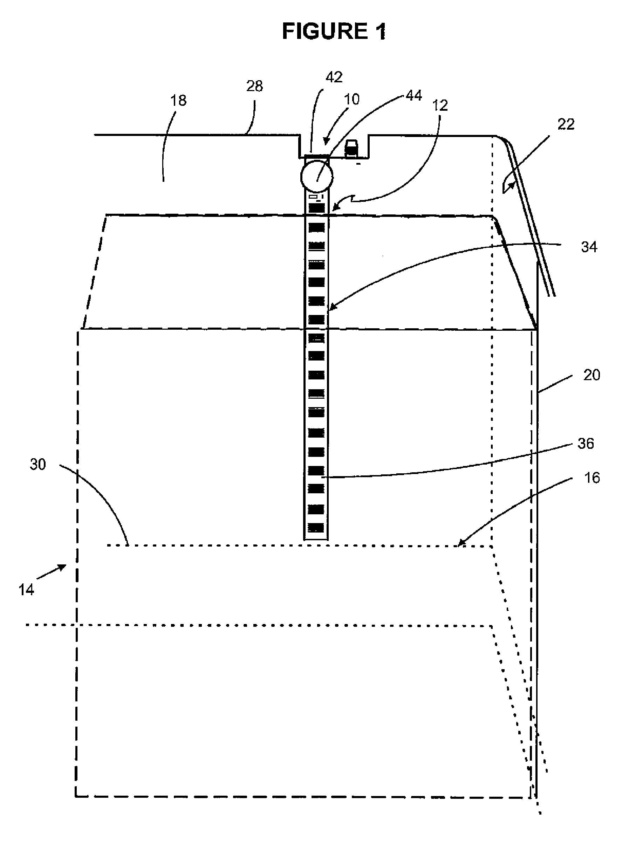

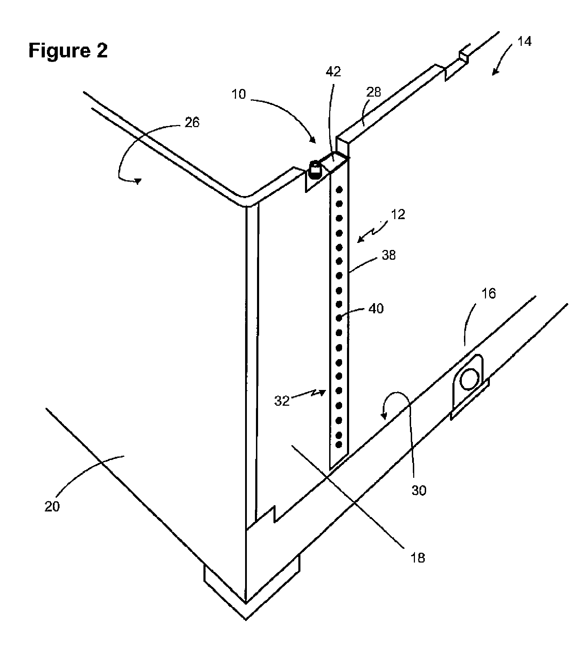

Referring now to Figures 1 and 2 there is shown one embodiment of the invention 10 being a fluid level indicator strip 12 for a receptacle 14 containing a volume of fluid within an impermeable liner. The receptacle comprises a bottom surface 16 and four walls (of which two are shown here 18, 20). Each of the walls has an inside surface 22, an outside surface 26, a top end 28 and a bottom end 30. There is also a removable top which is not illustrated.

The fluid level indicator strip 12 comprises a flexible thin impermeable elongate strip 32. The strip has a first part 34 that houses fluid level sensing means 36. The first part is disposed within the receptacle 14. There is also a second part 38 that houses a fluid level display means 40. The second part is disposed outside of the receptacle 14. There is also a third part 42 that connects the first part 34 and the second part 38. Power means 44 is provided for electrically connecting the Fluid level sensing means 36 to the fluid level display means 40.

Referring to Figure 1, there is illustrated the first part 34 disposed vertically on the inside surface 22 of one of the four walls 18. The invention can be disposed on any one of the four walls of the receptacle.

Referring to Figure 2, there is illustrated the second part 38 disposed opposite the first part 34 vertically on the outside surface 26 of the wall 18. The third connecting part 42 is disposed horizontally on the top surface 24 of wall 18 so that when the cover is placed on the receptacle and secured in place the third part does not interfere with the seal of the receptacle.

Referring to Figure 1, while the impermeable liner containing the volume of fluid is not shown, it is to be understood that the first part 34 is placed between the liner and the inside surface 22 of wall 18.

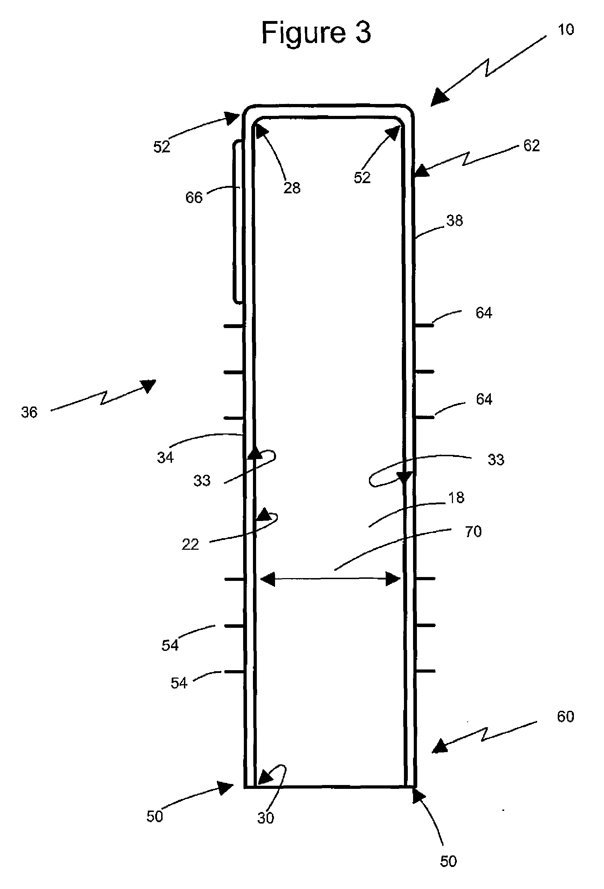

Referring to Figure 3, there is shown in cross-section wall 18 with a cross-section of the invention 10. The first part 34 has a bottom end 50 and a top end 52. The bottom end 50 of the first part 34 is disposed adjacent to the bottom end 30 of the inside surface 22 of wall 18. The top end 52 of the first part 34 is disposed adjacent to the top end 28 of the wall 18 inside surface 22.

The fluid level indicator strip 12 level sensing means 36 comprises a series of spaced apart fluid level sensors 54.

In one embodiment of the invention the fluid level sensors are pressure sensors arranged serially in a vertical column. There are typically a predetermined number of pressure sensors on the fluid level indicator strip to accommodate the height of the receptacle and the necessary graduation of fluid depth measurement within the receptacle.

In one embodiment of the invention the pressure sensors are piezoresistive. In another embodiment of the invention the pressure sensors are electro-mechanical. Other types of suitable pressure sensors can be used.

The fluid indicator strip 12 is a flexible, thin and impermeable elongate strip comprising a first impermeable layer fixed over a second impermeable layer. The fluid level sensing means and the fluid level display means are sandwiched between the first and said second impermeable layers. The inside surface of the strip 33 is adhesive so that the first part can be removeably fixed to a receptacle wall inside surface and the second part can be removeably fixed to the opposite receptacle wall outside surface.

The fluid level indicator strip 12 second part 38 has a bottom end 60 and a top end 62. The second part bottom end 60 is disposed opposite the first part bottom end 50. The second part top end 62 is disposed opposite the first part top end 52.

Referring to Figure 2 and Figure 3, the fluid level display means 40 comprises a series of spaced apart visual displays 64. The visual displays are disposed in a column and there are an equal number of visual displays as there are pressure sensors.

In one embodiment of the invention the visual displays are LEDs. The visual displays may also be LCDs with suitable low power consumption.

For each one of the pressure sensors there is a corresponding opposite visual display electrically connected to it so that as each of the pressure sensors is activated, the corresponding opposite visual display is activated resulting in the display of fluid level within the receptacle outside the receptacle. This is shown by arrow 70 in Figure 3.

Power means is a battery 66 disposed proximate to the top end of the second part of the indicator strip.

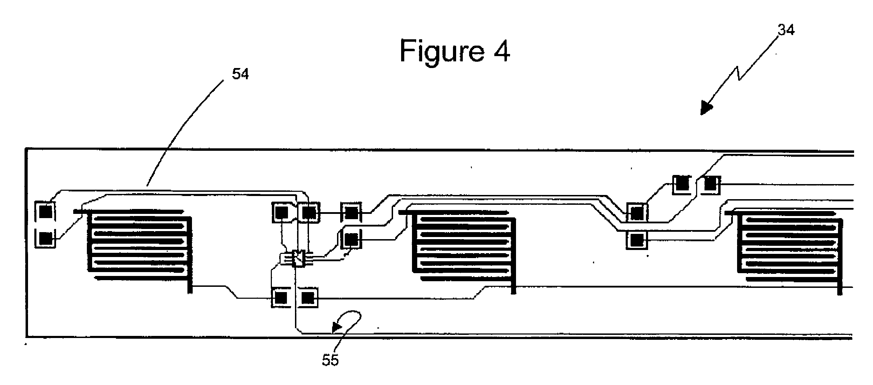

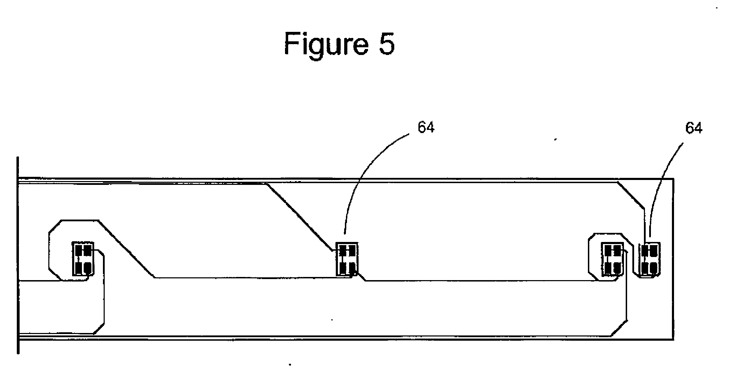

Referring to Figure 4, there is shown a partial schematic diagram of the fluid level indicator strip 12 first part 34 illustrating the circuits of three of the pressure sensors 54. Each of the pressure switches 54 are connected electrically 55 to its corresponding visual display shown on Figure 5.

Referring to Figure 5, there is shown a partial schematic diagram of the fluid indicator strip 12 second part 38 illustrating the visual displays 64. In the embodiment shown in Figure 5, pressure switch SW1 is connected to display L1. SW1 is located at the bottom of the first part and correspondents to L1 located at the bottom of the second part. When SW1 is activated by pressure from the liner L1 will illuminate.

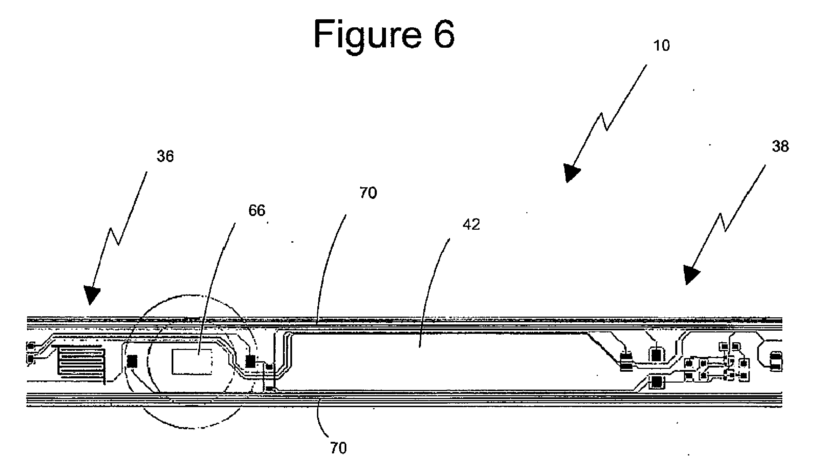

Referring to Figure 6, there is illustrated a partial schematic diagram of the invention 10 third part 42 connecting first part 36 to second part 38. The electrical connections 70 between the pressure switches and the visual displays are also shown running through the third part. Battery 66 is shown disposed at the top end of the first part.

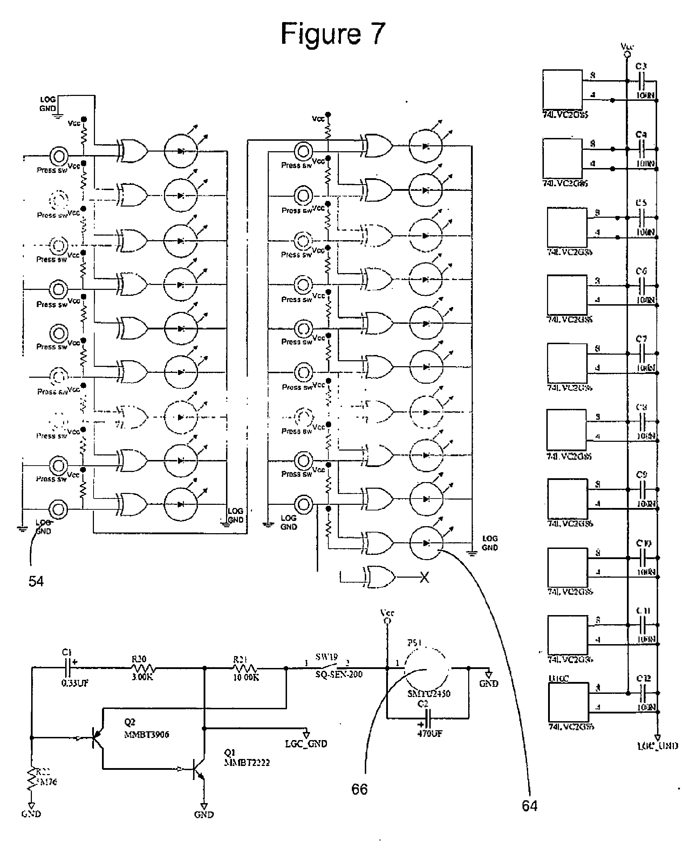

Referring to Figure 7, there is illustrated a schematic diagram of the electronic layout of one embodiment of the invention showing the pressure switches 54 and their operative relationship to the visual displays 64. The battery 66 circuit is also shown

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the spirit of the invention.

## Claims

1. A fluid level indicator strip for a receptacle containing a volume of fluid within an impermeable liner, said receptacle comprising a bottom surface, four walls each having an inside surface, a top surface, an outside surface, a top end and a bottom end and a removeable top, wherein said fluid level indicator strip comprises:
a. A flexible thin impermeable elongate strip having a first part housing a fluid level sensing means for disposition within the receptacle, a second part housing a fluid level display means for disposition outside of the receptacle; a third part for connecting said first part and said second part; and, power means electrically connecting said fluid level sensing means to said fluid level display means;
b. Wherein said first part is disposed vertically on one of said four walls inside surface;
c. Wherein said second part is disposed vertically on said one of the four walls outside surface opposite the first part; and,
d. Wherein said third connecting part is disposed horizontally on said top surface.

2. The fluid level indicator strip of claim 1, wherein the first part is disposed between the wall inside surface and said impermeable liner.

3. The fluid level indicators strip of claim 1, wherein the first part has a bottom end and a top end and, wherein said first part bottom end is disposed adjacent to said wall inside surface bottom end and, wherein said first part top end is disposed adjacent to said wall inside surface top end.

4. The fluid level indicator strip of claim 1, wherein said fluid level sensing means comprises a series of spaced apart fluid level sensors.

5. The fluid level indicator strip of claim 4, wherein said series of spaced apart fluid sensors comprises a series of spaced apart pressure sensors.

6. The fluid indicator strip of claim 5, wherein the series of spaced apart pressure sensors comprises a predetermined number of pressure sensors disposed in a column.

7. The fluid indicator strip of claim 5, wherein said predetermined number of pressure sensors comprises piezoresistive pressure sensors.

8. The fluid indicator strip of claim 5, wherein the said predetermined number of pressure sensors comprises electro-mechanical pressure sensors.

9. The fluid indicator strip of claim 1, wherein said flexible thin impermeable elongate strip comprises a first impermeable layer fixed over a second impermeable layer and, wherein the fluid level sensing means and the fluid level display means are sandwiched between said first and said second impermeable layers.

10. The fluid indicator strip of claim 9, wherein one surface thereof is adhesive so that the first part can be removeably fixed to a receptacle wall inside surface and the second part can be removeably fixed to said receptacle wall opposite outside surface.

11. The fluid level indicator strip of claim 1, wherein the second part has a bottom end and a top end and, wherein said second part bottom end is disposed opposite the first part bottom end and, wherein said second part top end is disposed opposite the first part top end.

12. The fluid level indicator strip of claim 1, wherein said fluid level means comprises a series of spaced apart visual displays

13. The fluid level indicator strip of claim 12, wherein said series of spaced apart visual displays comprises a predetermined number of visual displays disposed in a column.

14. The fluid level indicator strip of claim 13, wherein said predetermined number of visual displays are LEDs.

15. The fluid level indicator strip of claim 6, wherein for each of said predetermined number of pressure sensors there is a corresponding opposite visual display electrically connected thereto, so that as each of the predetermined number of pressure sensors is activated, the corresponding opposite visual display is activated resulting in the display of fluid level within the receptacle outside the receptacle.

16. The fluid indicator strip of claim 1, wherein said power means is a battery disposed proximate to the top end of the fluid level sensing means inside the receptacle.

17. The fluid indicator strip of claim 1, wherein said third part is disposed on said top surface of the receptacle walls so that when said removable top is in place, the receptacle is sealed.

18. A fluid level indicator strip for a receptacle containing a volume of fluid within an impermeable liner, said receptacle comprising a bottom surface, four walls each having an inside surface, a top surface, an outside surface, a top end and a bottom end and a removeable top, wherein said fluid level indicator strip comprises:
a. A flexible thin impermeable elongate strip having a first part housing a predetermined number of serially spaced apart pressure sensors for vertical disposition within the receptacle between one of said four walls inside surface and said impermeable liner, a second part housing said predetermined number of serially spaced apart visual displays for vertical disposition outside of the receptacle on said outside surface of said one of the four walls opposite said first part; a third part for connecting the first part and said second part; and, a battery electrically connecting the pressure sensors and the visual displays;
b. Wherein said third connecting part is disposed horizontally on said top surface; so that,
c. As each of the pressure sensors is activated, the corresponding opposite visual display is activated resulting in the display of fluid level within the receptacle outside the receptacle.

19. The fluid level indicator strip of claim 18, wherein said pressure sensors are piezoresistive.

20. The fluid level indicator strip of claim 18, wherein said visual displays are LEDs.
